Europäisches Patentamt

European Patent Office

Office européen des brevets

(11) Publication number: **0 471 927 A2**

# EUROPEAN PATENT APPLICATION

(21) Application number: **91108589.2**

(22) Date of filing: **27.05.91**

(51) Int. Cl.5: **G06F 7/38**, G06F 7/04

(30) Priority: **20.08.90 US 570258**

(43) Date of publication of application:
**26.02.92 Bulletin 92/09**

(84) Designated Contracting States:
**DE FR GB**

(71) Applicant: **International Business Machines Corporation**
**Old Orchard Road**
**Armonk, N.Y. 10504(US)**

(72) Inventor: **DeMontaudouin, Yves**
**250 Mamaroneck Avenue**
**White Plains, New York 10605(US)**

(74) Representative: **Schäfer, Wolfgang, Dipl.-Ing.**
**European Patent Attorney, IBM Deutschland**
**GmbH, Schönaicher Strasse 220**
**W-7030 Böblingen(DE)**

(54) **System for exact arithmetic computation including quadratic extensions.**

(57) An arithmetic processor for a digital data processing system, and methods of operating same, employing a Truncated Dyadic Arithmetic (TDA) number representation for implementing exact equality testing of the results of rational arithmetic computations. The arithmetic processor includes circuitry for receiving a digital representation of a number, a register for storing the received number in a truncated dyadic arithmetic representation, including a mantissa field having m bits and an order field having o bits. A modulo field associated with each number is also stored or otherwise maintained. The arithmetic processor further includes circuitry for operating on the stored number in accordance with one or more arithmetic operations, including addition, subtraction, division, multiplication and square root, to obtain a result that is expressed in the truncated dyadic arithmetic representation. Additional circuitry compares the result to another result obtained from another truncated dyadic arithmetic operation.

FIG. Ia

FIG. Ib

FIELD OF THE INVENTION:

This invention pertains generally to method and apparatus for testing an exact value of arbitrary arithmetic expressions using a standard length binary representation or a standard length binary representation in conjunction with a floating point arithmetic unit and, in particular, pertains to a Truncated Dyadic Arithmetic (TDA) representation employed for equality testing in exact rational arithmetic computations.

BACKGROUND OF THE INVENTION:

Conventional floating point calculations performed with digital data processing apparatus, although approximate, are generally adequate for graphical or for quantitative analysis applications. However, the conventionally obtained calculations are inadequate for detecting singular cases in that they lack facilities for exactly testing for an equality between two numeric expressions. For example, to improve the reliability of a class of programs known as "solid modelers" various algebra systems have been considered, including interval arithmetic and extended precision rationals. Unfortunately, these algebra systems have been found to be either too conservative or too expensive for practical purposes.

Most algorithms in numerical analysis or geometric modeling require an ability to compare numeric values obtained from the evaluation of complicated algebraic expressions. However, calculations performed in floating point format, due to round-off errors, systematically produce inaccurate results. As a result, several different techniques that specifically address the inherent round-off error problem have been implemented or proposed.

One technique is based on an epsilon-based tolerance that determines an equality of two numbers according to a magnitude of their difference. However, this technique has several shortcomings. For example, let $a = 2.994$; $b = 3.000$; $c = 3.006$; and the value of the epsilon "tolerance" be estimated to be equal to 0.010. This technique will determine that $a = b$ since $|a-b| <$ epsilon, $b = c$ since $|b-c| <$ epsilon, but $a \neq c$ since $|a-c| >$ epsilon. Thus, the transitivity axiom is not respected. As a result, it is difficult to obtain sound equality decisions with such an algebra in that equality is not an equivalence relation.

A geometric example illustrating the shortcomings of this technique involves a line of intersection of two planes that lies in a subset of both planes. As a result, any point on the line should also lie on the planes. However, for planes whose normals are almost parallel the epsilon-based equality test may conclude that a point does not lie on either plane, but lies instead on the intersection line. Such inconsistencies are a major contributing factor to the acknowledged unreliability of many geometric modelers and numerical libraries.

Another technique that attempts to eliminate the effects of round-off error is known as interval arithmetic. Interval arithmetic is a systematic method that computes the value of epsilon, instead of estimating the value. As a result, numbers are represented as a value and an associated tolerance.

However, the results obtained from this technique are in general too "pessimistic". That is, two complicated expressions may evaluate to have large overlapping intervals. As a result, nothing can be determined as to the possible equality of the resulting numbers. It is noted that with this method the property of equality is also not transitive.

Another technique employs a rational integer representation wherein rational numbers are represented as integers of arbitrary length. Although these computations provide exact answers, they require an amount of memory storage and processing time that grows exponentially with the number of operations in the expression.

As a result, these various conventional techniques for numeric calculations are inadequate or impractical for testing, with digital data processing apparatus, an exact equality of two rational numbers.

The following U.S. Patents all describe various numeric processing apparatus and method. In U.S. Patent 4,720,809, January 19, 1988, entitled "Hybrid Floating Point/Logarithmic Number System Arithmetic Processor" Taylor discloses a processor that converts input floating point operands to a logarithmic format and an arithmetic unit that operates on the converted operands. In U.S. Patent 4,386,413, May 31, 1983, entitled "Method and Apparatus of Providing a Result of a Numerical Calculation with the Numbers of Exact Significant Figures" Vignes et al. disclose the processing of a truncated mantissa, including normalization and denormalization, in conjunction with an associated item of error information. In U.S. Patent 4,878,190, October 31, 1989 entitled "Floating Point/Integer Processor with Divide and Square Root Functions" Darley et al. disclose a processor that includes a signed digit multiplier array and a feedback path for providing speed improvements in division and square root operations. In U.S. Patent 4,777,613, October 11, 1988, entitled "Floating Point Numeric Data Processor" Shahan et al. describe a numeric data processor said to execute the complete set of floating point operations recommended by ANSI/IEEE Std. 754-1985. U.S. Patents 4,747,067 and 4,843,584 each describe apparatus for processing complex numbers.

In an article in IBM Technical Disclosure Bulletin, Vol. 16, No. 1, June 1973, entitled "Computer Representation of Real Numbers" P. B. Hwang discloses a technique for expressing rational and irrational numbers in exact values and also arithmetic operations that operate on the represented numbers.

In an article entitled "Implementing Exact Calculations in Hardware", IEEE Transactions on Computers, Vol. C-36, No. 6, June 1987, pp. 764-767, J.J. Thomas and S.R. Parker describe a technique using a single modulus P arithmetic. The technique is said to implementable on microprocessors, VLSI and/or software to provide exact calculations over the rational numbers as well as complex numbers. However, these authors do not discuss the concept of "order" in their representation which, as is described below, is essential for a successful implementation of a dyadic arithmetic in a hardware and/or software embodiment. Also, the author's representation is extracted from the p-adic expansion using a fixed format or "window". This fixed format is not believed to be applicable for computation on a relatively small number of bits, where the "order" may be very large or very small. For example, the order of the determinant of the Hilbert Matrix of size 80 has a value of -480.

R.T. Gregory and E.V. Krishnamurthy, in "Methods and Applications of Error-Free Computation", published by Springer-Verlag, New York, 1984, discuss, in Chapter II, finite-segment p-adic arithmetic. This arithmetic is said to be free of rounding errors. However, these authors also do not consider other than a fixed format representation which can be shown to be inappropriate for implementing exact equality testing upon a digital data processing device.

Based on the foregoing it can be appreciated that a need exists for an algebra system that provides, at low processing cost, quasi-exact equality tests for arbitrarily complicated algebraic expressions. This algebra system requires facilities for performing addition, subtraction, multiplication, difference and also square root operations in order to serve as an adjunct to conventional digital computer arithmetic apparatus, such as a floating point numeric processor.

It is thus an object of the invention to provide method and apparatus for realizing an algebra system that provides the above and other features and that is also readily implemented with digital data processing circuitry.

It is another object of the invention to provide an arithmetic processor for a digital data processing system, and methods of operating same, that employs a Truncated Dyadic Arithmetic representation for equality testing the results of rational arithmetic computations.

## SUMMARY OF THE INVENTION

The foregoing and other problems are overcome and the objects of the invention are realized by an arithmetic processor for a digital data processing system, and by methods of operating same, that employs a Truncated Dyadic Arithmetic (TDA) number representation for implementing exact equality testing of the results of rational arithmetic computations. The arithmetic processor includes circuitry for receiving a digital representation of a number and a register for storing the received number in a truncated dyadic arithmetic representation, including a mantissa field having m bits and an order field having o bits. A modulo field associated with each number is also stored or is otherwise maintained by external circuitry or software. The arithmetic processor further includes circuitry for operating on the stored number in accordance with one or more arithmetic operations, including addition, subtraction, division, multiplication and square root, to obtain a result that is expressed in the TDA representation. The result is compared to another result obtained from another TDA operation. If the mantissa field and the order field of each result are identical over a specified number of bits, a term referred to herein as Precision__of__Equality, the results of the two operations are considered equal.

The value of the modulo is readily determined as being equal to a $TDA_{order}$ of the number plus the number of bits that comprise the mantissa and, as a result, is not required to be separately encoded. The value of the modulo can also be derived from the value of the order of the first most significant bit that is not represented in the mantissa. That is, if the mantissa were eight bits in length the order of the ninth bit gives the modulo of the represented TDA number. The consideration of the value of the modulo, in conjunction with the value of the order and the mantissa, is one significant feature that distinguishes the truncated dyadic arithmetic apparatus and method of the invention from the prior art p-adic arithmetic teachings noted above.

## BRIEF DESCRIPTION OF THE DRAWING

The above set forth and other features of the invention are made more apparent in the ensuing Detailed Description of the Invention when read in conjunction with the attached Drawing, wherein:

Fig. 1a is a block diagram illustrating a floating point arithmetic processor having an adjunct TDA numeric processor associated therewith;

Fig. 1b is a representation showing an implementation of four arithmetic operations including the interaction therebetween;

Fig. 2 is a flowchart showing a normalization process;

Fig. 3 is a flowchart showing a denormalization process;

Fig. 4 is a flowchart showing the conversion of an integer into a TDA number;

Fig. 5 is a flowchart showing a cast left (CASTL) operation;

Fig. 6 is a flowchart showing the addition of two registers and the operation of the carry forward mechanism, where r is the carry;

Fig. 7 is a flowchart showing the subtraction of registers;

Fig. 8 is a flowchart depicting a rectification (RECT) technique which shifts the mantissa in order to equalize orders before adding or subtracting;

Fig. 9 is a flowchart depicting a function that changes a sign of a register;

Fig. 10 is a flowchart showing the division of two registers;

Fig. 11 is a flowchart showing the multiplication of two registers;

Fig. 12 is a flowchart showing the division of two TDA numbers which handles special cases, such as division by zero, and which employs the order and modulo formulas;

Fig. 13 is a flowchart showing the multiplication of two TDA numbers which also handles special cases and which employs the order and modulo formulas;

Figs. 14a and 14b are a flowchart showing the addition of two TDA numbers which handles special cases and employs order and modulo formulas;

Fig. 15 is a flowchart showing the derivation of an opposite of a TDA number;

Fig. 16 is a flowchart showing the subtraction of two TDA numbers;

Fig. 17 is a flowchart showing a square root operation performed with a TDA number;

Fig. 18 is a flowchart showing a square root operation taken with a unit; and

Fig. 19 is a flowchart showing the testing of equality between two TDA numbers A and B.

## DETAILED DESCRIPTION OF THE INVENTION

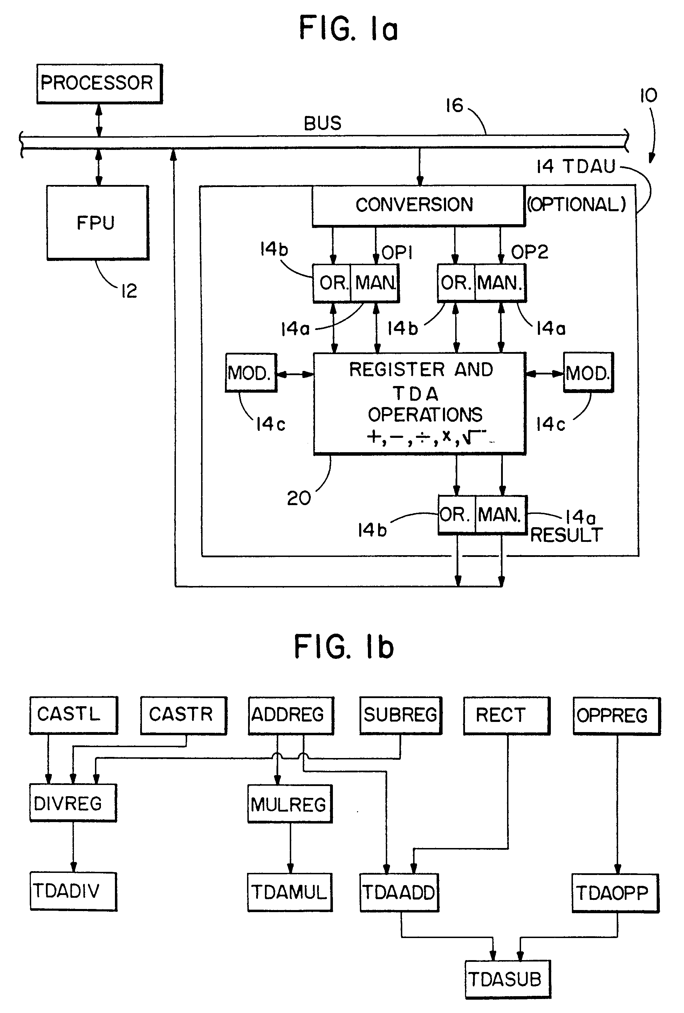

Referring to Fig. 1a there is illustrated a portion of a data processing system 10, specifically a Floating Point Unit (FPU 12) and a Truncated Dyadic Arithmetic Unit (TDAU) 14. For the purpose of this description the FPU 12 may be considered to be conventional in design and operation and is not further described in any significant detail. It is sufficient to say that the FPU 12 employs a standard floating point representation, or any other evaluating format, that expresses an approximate value of a number. That is, a number is expressed as an exponent and as a mantissa, the mantissa containing the most significant bits of the number for approximating a desired value.

A bus 16 is provided for coupling the FPU 12 and TDAU 14 to other circuitry from which operands are sourced and to which the results of arithmetic operations performed on the operands are provided.

In accordance with the invention the TDAU 14 employs a number representation that is especially adapted for performing precise equality tests. This arithmetic representation is referred to herein as "Truncated Dyadic Arithmetic" (TDA) or as "2-adic", a term which conveniently emphasizes the base-2 aspect of the number system. As will be shown, this number system is well suited for implementing digital numeric processing apparatus.

In accordance with one mode of operation numbers are provided in floating point format and in parallel to the FPU 12 and the TDAU 14. The FPU 12 operates on the numbers in a desired floating point representation (single precision, double precision, etc.) to accomplish a required arithmetic operation (addition, division, etc.). In parallel therewith the TDAU 14 converts the numbers to 2-adic format and operates on the converted number(s) to accomplish the same arithmetic operation as the FPU 12.

As an example, if the arithmetic operation is a single precision addition the FPU 12 adds two operands expressed in single precision format to produce a result expressed in single precision floating point format. Simultaneously the TDAU 14 converts the operands to 2-adic format and adds the converted numbers. The result of this 2-adic addition is a first 2-adic result that, when compared to a second 2-adic result, enables an exact determination to be made as to whether the result of the 2-adic addition is exactly equal to the second 2-adic result.

It should be noted that Fig. 1a illustrates but one suitable embodiment of the invention and that, if desired, the numbers could be converted to 2-adic format by an external agency such as by another circuit

4

device or by software running on a host processing system. Also, the TDA results could be compared by circuitry internal or external to the TDAU 14 or by software running on the host. Similarly, the functionality of the TDAU 14 can be realized wholly or partially in a software embodiment as opposed to the hardware embodiment illustrated, although for performance reasons it may be desirable that this functionality be implemented within hardware. Also, the functionality of the TDAU 14 could be incorporated within the FPU 12.

To provide a simple example of the operation of the TDAU 14 it is assumed that the FPU 12 and the TDAU 14 operate in parallel to accomplish the same numeric operations, one in floating point format and the other in 2-adic format. One operation multiplies 35 times 40/35 (35X40/35) whereas a second operation adds 35 to itself 40/35 times. The final result of each of these operations should be equal. However, due to round-off errors in the FPU 12 the two results may differ, or be mathematically distinguishable one from another, resulting in a subsequent erroneous determination of equality. However, in accordance with the invention, for the first operation the numbers (35) and (40/35) are each converted to 2-adic format and then multiplied by the TDAU 14 to obtain a first result. For the second operation 35 is added to itself (40/35) times, also in 2-adic format, to obtain a second result. The first result and second result are then compared to one another to some specified number of significant bits and, if the two results are determined to be equal, the results obtained from the two FPU 12 operations can also said to be equal.

It is important to note that this invention does not propose to teach a method or apparatus that performs floating point arithmetic operations without round-off error. That is, provided only the result of a 2-adic arithmetic operation from the TDAU 14 there is, at present, no corollary method for decoding or converting the 2-adic result back to a floating point representation thereof.

Two basic and important properties of TDA are the following. First, every bit computed is accurate because of a forward carry mechanism. That is, the carry propagates from a finite side to an infinite side of the mantissa, and not from the infinite side to the finite side as in floating point calculations. Second, TDA can be implemented with a fixed length register and, therefore, with available types of electronic hardware components and integrated circuits.

It is shown below that the invention exploits to great advantage the use of a double representation of numbers, specifically an evaluative representation and a comparative representation. The role of the evaluative representation is to evaluate the number with a format such as, by example, a floating point format, a fixed point format, or any format that permits evaluation of the number to a desired degree of precision. By example, the FPU 12 implements the evaluative representation. The format for the comparative evaluation is, however, based on a general theory of p-adic numbers and, specifically, upon p-adic numbers where p = 2. The TDAU 14 implements this 2-adic comparative evaluation.

What follows now is a detailed discussion of the TDA number system and the numeric operations performed therewith that accomplish the objects of the invention.

As employed herein TDA numbers are represented by three fields. A first field is a mantissa field 14a comprised of SZMAN bits. In a conventional single precision floating point format a mantissa field has 24 bits. A second field is an order field 14b comprised of SZORD bits. The order field 14b is analogous to the exponent field in floating point arithmetic which may be stored as eight bits. A third field is a modulo field 14c which contains an integer value. For convenience, SZMAN and SZORD are each equal to the number of bits of the associated floating point mantissa and exponent registers, respectively. Only the mantissa field 14a and the order field 14b are required to be encoded from the input number as the value of the modulo field 14c may be derived from these values as described below.

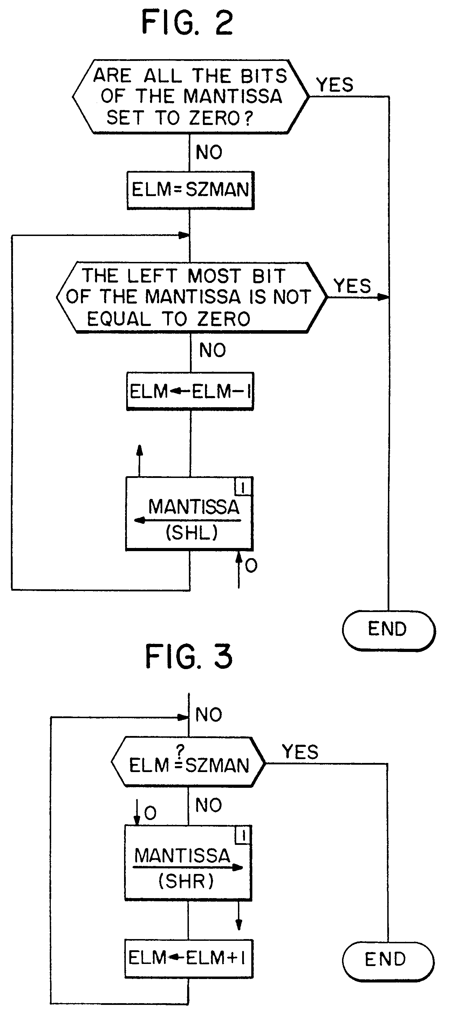

As in floating point arithmetic the SZORD field and the SZMAN field are preferably contained in a common hardware register 14'. Typically the SZMAN field will occupy 75% of the register and the SZORD field the remaining 25%. By example, for a 32 bit register, 24 of the bits are associated with the SZMAN field and eight bits with the SZORD field. As will be described below, the modulo field 14c is not required to be embodied in a physical register but may be maintained, instead, by software running on the host system. In practice the TDAU 14 will typically include at least a pair of registers OP1 and OP2 for holding two operands and may contain a third register (RESULT) for holding a result or a partial result. The registers OP1 and OP2 are coupled to an operations block 20 that operates on the register contents to provide arithmetic and other functions as expressed in the flowcharts of Figs. 2-18 and as described in detail below. In this regard, the modulo field registers 14c may also be coupled to the operations block 20 for performing operations thereon as described in detail below.

All rational numbers are represented using integers. The TDA representation or encoding of strictly positive integers (order and mantissa) is as follows.

First, it is noted that a digital computer accurately represents a positive integer if the integer is not too large. The standard representation of x is:

$(x_N,...,x_0)$
where:

$$x = \sum_{i=0}^{i=N} x_i 2^i.$$

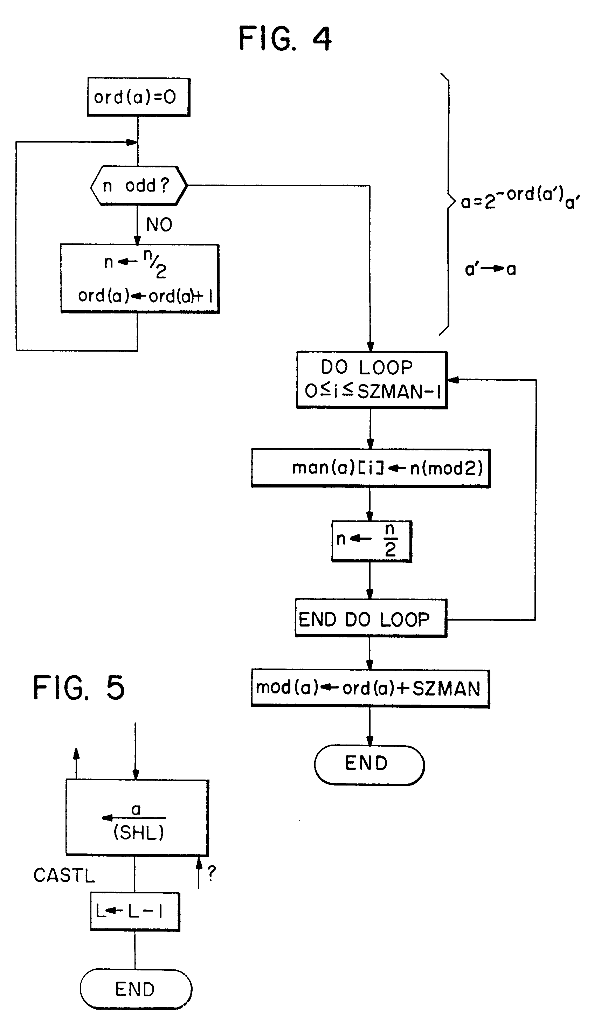

The TDA representation of the same number x is slightly different and is expressed as follows, where reference is made to the flowchart of Fig. 4 which describes a method of converting or encoding an integer into a TDA number.

First, a count of all trailing zeros gives the order of the TDA number. By example, when represented in the standard format, and if eight bits are allocated for the mantissa, the number 12 is expressed as $12 = 0 \times 2^7 + 0 \times 2^6 + 0 \times 2^5 + 0 \times 2^4 + 1 \times 2^3 + 1 \times 2^2 + 0 \times 2 + 0 \times 2^0$, or $x = 00001100$.

In TDA the trailing right consecutive zeros are counted and give the order. In this example there are two such zeros which define the order of the number 12 as two.

Next, the trailing zeros are removed and the remaining bits are reversed, resulting in the least significant bit being stored first on the left, also referred to as the finite side. This reversal is for convenience only, as will become apparent. After reversal there is obtained:
$x = 11000000$; $\text{ord}(x) = 2$;
wherein $\text{ord}(x)$ denotes the order of x, or two for this example, and the binary number 11000000 represents the mantissa having bits that increase in significance from left to right.

Thus, the general dyadic case is represented by the summation:

$$a = \sum_{-\infty}^{+\infty} a_i 2^i.$$

If the number is not zero then for first $a_i$ that is not zero the value of i gives the mathematical order of the truncated dyadic number. When the input number is first encoded into the truncated dyadic number the mathematical order is equal to the TDA order and a one bit is positioned at the least significant bit, or the left-most bit, of the mantissa field.

It should be noted that a TDA number cannot always be maintained with a one bit in the left-most mantissa bit position. That is, during operations performed on the TDA number one or more zeroes may appear in the left-most position(s). Subsequently, to force a one bit back into the left-most position a left shift operation, referred to herein as normalization, is required. Unfortunately, normalization causes the insertion of one or more unknown digits, defined to be zeroes herein, into the right side of the mantissa. As a result, and for the fixed format p-adic number systems of the prior art referred to above, a subsequent evaluation of such a normalized mantissa may lead to an erroneous determination of equality due to the insertion of the unknown bits. In accordance with the invention the maintenance and manipulation of a modulo value for each TDA number ensures that two results are not evaluated over more than a number of digits that are known to be accurate.

For example, the TDA representation of 12 is 11000000 but, due to arithmetic operations, the content of the mantissa register may become 00110000. In TDA the $\text{TDA}_{order}$ of a number is defined to be the order of the left-most bit of the mantissa. In this case the $\text{TDA}_{order}$ will become zero so as to make the first logical one of order two, as it was initially when first encoded. The value of the modulo is thus readily determined as the $\text{TDA}_{order}$ plus the number of bits of the mantissa and, as a result, is not required to be separately encoded. The value of the modulo can also be conveniently derived from the value of the order of the first most significant bit that is not represented in the mantissa. That is, if the mantissa were eight bits in length the order of the ninth bit gives the modulo of the represented TDA number. It should be noted that the consideration of the modulo is one significant feature that distinguishes the truncated dyadic arithmetic apparatus and method of the invention from the prior p-adic arithmetic teachings noted above.

```
Example: 12=11000000; order 2, modulo 10, or
         12=00011000; order -1, modulo 7.
```

Of course, in both cases the mathematical order is two, but it is the $TDA_{order}$ which is encoded in the hardware or by the software. In the formulas relating to the order the mathematical order is employed. The value of the modulo yields the $TDA_{order}$ in accordance with the relationship:

$TDA_{order}$ + SZMAN = Modulo.

Also, it is noted that:

# of leading zeros = math. order - $TDA_{order}$.

Reference is made to the flowchart of Fig. 2 for a normalization process and to the flowchart of Fig. 3 for a denormalization process. In Fig. 2 when shifting the mantissa to the left the leftmost bit is lost and the rightmost bit becomes a zero. If the mantissa is not initially filled with zeroes the outcome of this technique is to provide a normalized mantissa having a one bit at the left-most bit position. The denormalization process of Fig. 3 performs a shift right operation, shifting out of the right-most bit position while shifting in (SZMAN-ELM) zeroes from the left-most bit position, where ELM represents the Effective Length of the Mantissa as is described below. If the effective length of the mantissa is strictly smaller than the SZMAN, then the mantissa is shifted to the right and is filled with (SZMAN - ELM) leading zeroes.

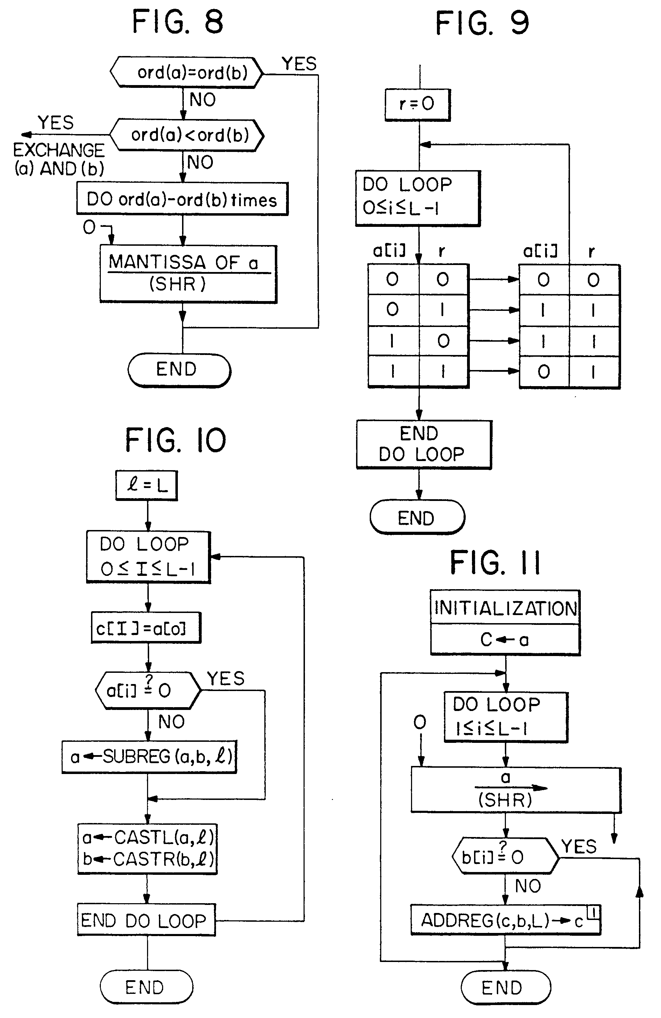

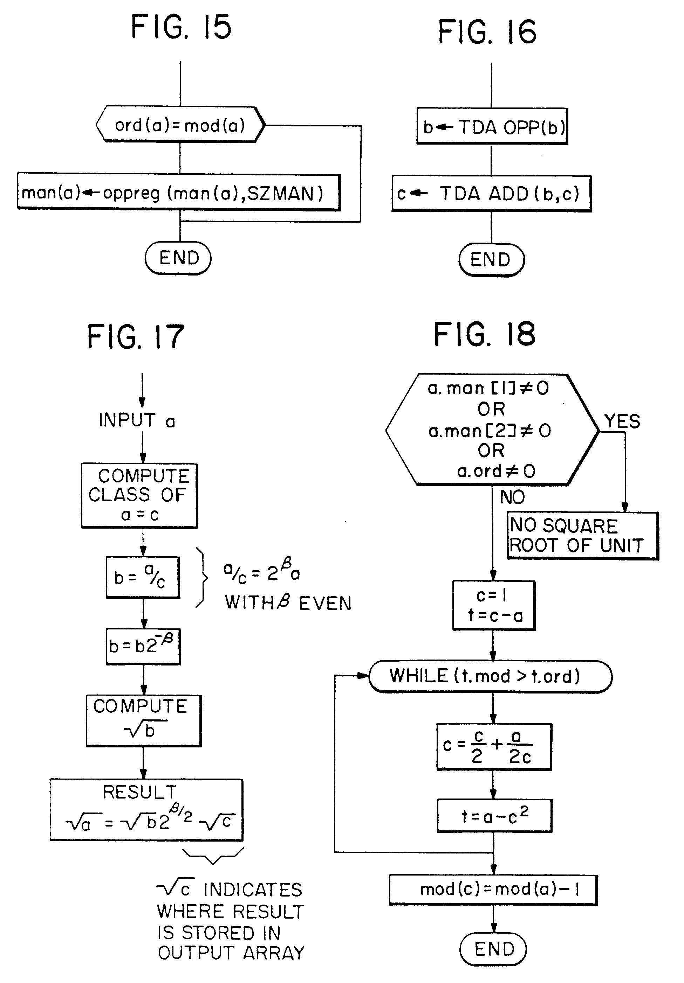

The TDA representation of a negative number is now described. Let n be a strictly negative number. It can be shown that the number 513 is represented in the same way as the number 1 would be. Therefore, it can be said that 513 and 1 are equivalent in the TDA representation. In the same manner 1026 and 2 are equivalent, because they also have the same representation. Generalizing, it can readily be shown that $2^{ord(x)+SZMAN}$ can be added or subtracted without changing the representation. This property is employed to represent negative numbers as follows. First, the order of the number's opposite is found. The opposite of a TDA number is found in accordance with the flowchart of Fig. 15 while the opposite of a register is found in accordance with the flowchart of Fig. 9. For this example the opposite yields a positive integer of known order. There is then computed m = $2^{ord(n)+SZMAN}$ + n. It can be seen that this number is positive and that the representation of m together with ord(n) is the TDA representation of the original negative number.

As an example, it is desired to represent x = -796 with an eight bit mantissa. The opposite of -796 is 796 which has an order of two, and $2^{ord(n)+SZMAN}$+n = 228, or (4 x 57). Therefore, 228 is represented as 10011100; ord(228)=2 and there is obtained the order and mantissa of -796 as:

-796 = 100111100; ord(-796)=2.

In practice it is not required to first employ the standard representation to obtain the TDA representation of a number. In fact, it is not recommended in that many numbers are too large for the standard representation and yet still fit within the TDA representation. By example, using a mantissa of eight bits the number 512 is too large for the standard format. However, 512 is readily representable in TDA format since 512 = $2^9$ and thus:

512 = 10000000; ord(512) = 9.

Thus, even though most numbers do not fit within a TDA hardware register the number's truncated value is still representable in TDA. By example, with a mantissa of eight bits the number 513 is also too large for expression in the TDA format. However, the least significant bits are representable, as:

513 = 10000000; ord(513) = 0.

It is now shown that for the TDA representation of a rational number the order of a rational number (p/q); (p,q)=1 is equal to ord(p)-ord(q). This is expressed as

p/q = $2^{ord(p)-ord(q)}$(p'/q'),

and it can therefore be presumed that p and q are odd. This is essentially a division operation that is described in greater detail below. It is important to note that, regardless of the implementation, (p/q) is stored as an integer (n) that satisfies

ord((p/q)-n) ≥ ord(p/q) + SZMAN,

where SZMAN is the numbers of bits which represent (p/q) and on which (n) is represented exactly. This division procedure enables the representation of any floating point numbers or decimal numbers that are a subset of the rational numbers.

By example, 14/37 is represented as 11011101 and ord(14/37)=1.374 has the same representation. It is noted that 374-(14/37)=(13824/37) and that 13824 can be divided by 512. Thus, 13824/512=27.

In summary, it is enough to define the mantissa of an integer, and to have a method of division, since any rational number is a ratio of two integers. The mantissa of a positive number is found as follows: first divide n by $2^{ord(n)}$, and obtain n'. By definition of the order n' is an odd number. In TDA format the mantissa of n is simply the mantissa of n'. If the mantissa requires more bits for expression than provided in a given hardware register priority is given to the least significant bits. It is therefore convenient to store the least significant bit first (on the left) and move towards the right, in the exact opposite way as the mantissa is written in ordinary binary format. Reference is made to the flowchart of Fig. 4 for a number n that is transformed into TDA format. The quantity n can be in any format, so long as it can be assumed that the parity of n is obtainable and that n is divisible by 2. The mantissa of a negative number can be obtained by using a procedure as illustrated in Fig. 15.

Regardless of how the four basic arithmetic operations that are described below are implemented a net result of the implementation has the following property: any rational number p/q is represented in the same manner as an integer n. The relationship between n and (p/q) is that the order of ((p/q) -n) is greater than or equal to (ord(p/q) + SZMAN), where SZMAN represents the size, or number of bits, of the mantissa. In this regard it is assumed that n is exactly represented by (p/q).

There is now described the representation of the order and the modulo.

A first method for representing the order is similar to the technique in which the exponent is shifted in floating point operations. However, in TDA format the order is shifted such that $2^{SZORD-1}$ is represented by SZORD zeros. To achieve this representation it is enough to add (100...0) to the normal representation.

For example, the standard representation of 30 in eight bits is 00011110. Herein it is represented as 10011110 by the addition of 1000..0. If the number is negative, $2^{SZMAN}$ is added instead. For example, -30 has a representation of 226 which is represented in the standard format as 11100010. By adding 10000000 and dropping the carry there is obtained 01100010. This method enables the representation of the order of the TDA number from $(1 - 2^{SZMAN-1})$ to $(2^{SZMAN-1})$.

A second method for representing the order changes the sign of the modulo and then represents the number as an exponent in the IEEE standard for floating point arithmetic. By example, to represent 30 with an eight bit mantissa first change the sign of 30 to obtain -30. Next subtract -128 from -30 and obtain 98. In standard binary notation 98 = 01100010. In this manner also 128 is represented as 00000000.

There is now described the representation of zeroes. Let $2^{SZMAN-1}$ be M. Zero is represented as a mantissa filled with zeroes having an order of M. Because of the shifting convention referred to above, and in Fig. 8, the SZORD bits of the order are also filled with zeros. $0_i$ is employed to denote each TDA element such that the mantissa is filled with zeros and the order is i. It is noted that in a software embodiment this set of zeros is characterized as the set of numbers such that the order is equal to the modulo, and the mantissa may be disregarded.

As an example there is described a representation of a zero having an order of five. In a hardware implementation if SZMAN = SZORD = 8 the representation is 10000101 for the order and 00000000 for the mantissa. In a software implementation the order may equal five, the modulo may equal five and the mantissa is irrelevant.

In summary, zeros are represented by a mantissa containing all zeros, and an order. Therefore, there are many different possible representations of zero, as many as there are different possible orders.

Based on the foregoing discussion there are now presented equations that define the implementation of the TDA algebra system upon a hardware and/or software platform.

In regard first to the order, if   is used to denote one of the basic arithmetic operations then the following equations relate x y, ord(x y) and mod(x y).

```
ord(xy)  = ord(x) + ord(y);

ord(x/y) = ord(x) - ord(y);

ord(x+y) = min(ord(x), ord(y))⟺ord(x) ≠ ord(y) and

           ord(x+y) > min (ord(x), ord(y)),

otherwise;

ord(x-y) = min(ord(x), ord(y))⟺ord(x) ≠ ord(y) and

           ord(x-y) > min (ord(x), ord(y)),

otherwise.
```

The last two inequalities expressed above differ from those found in the p-adic literature in that the invention exploits the properties of 2-adic numbers within the more general p-adic number framework, specifically:

ord(1/x) = -ord(x); and

ord(-x) = ord(x).

In summary, it can be seen that the order of an integer n is defined as the largest exponent p such that $2^p$ divides n. This number is stored in a portion of a register specifically designated as the order field 14b, in a similar manner that the exponent is stored in the floating point convention. Two conventions may be employed to store this integer. Having defined the order of an integer, the order of a rational number p/q is given by the equality (ord(p/q) = ord(p)-ord(q)).

In regard now to the modulo the following equations are employed:

$$\mathrm{mod(x+y)} = \mathrm{min(mod(x),\ mod(y));}$$
$$\mathrm{mod(x-y)} = \mathrm{min(mod(x),\ mod(y));}$$
$$\mathrm{mod(xy)} = \mathrm{ord(x) + ord(y) + min(mod(x) - ord(x),}$$
$$\mathrm{mod(y) - ord(y));\ and}$$
$$\mathrm{mod(x/y)} = \mathrm{ord(x) - ord(y) + min(mod(x) - ord(x),}$$
$$\mathrm{mod(y) - ord(y)).}$$

As was previously stated the modulo need not be explicitly stored in the hardware. However, it is indirectly stored in accordance with the relationship that the modulo minus the mathematical order equals the effective length of the mantissa (ELM).

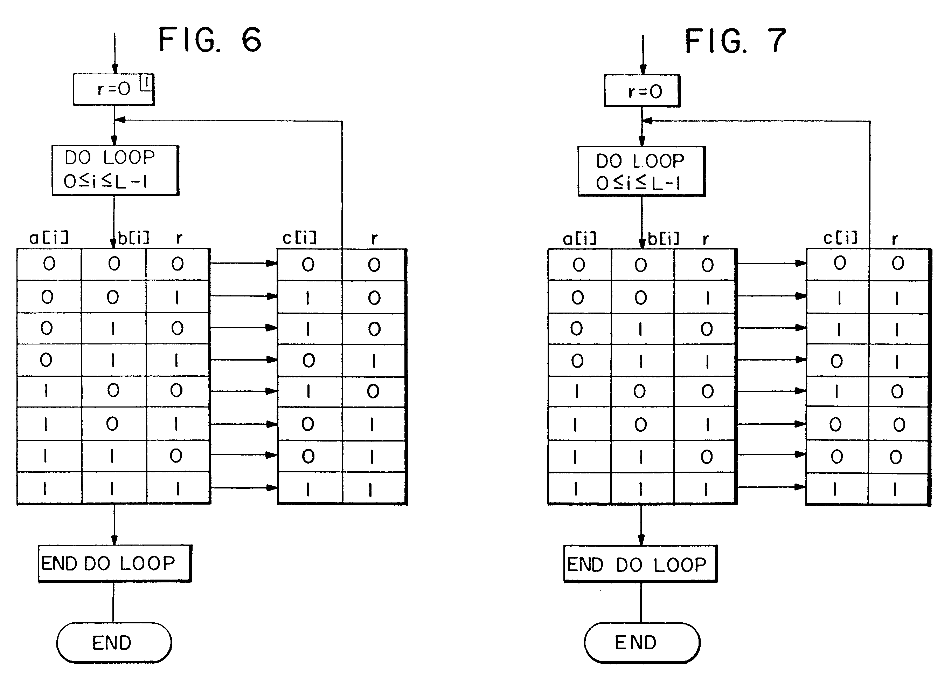

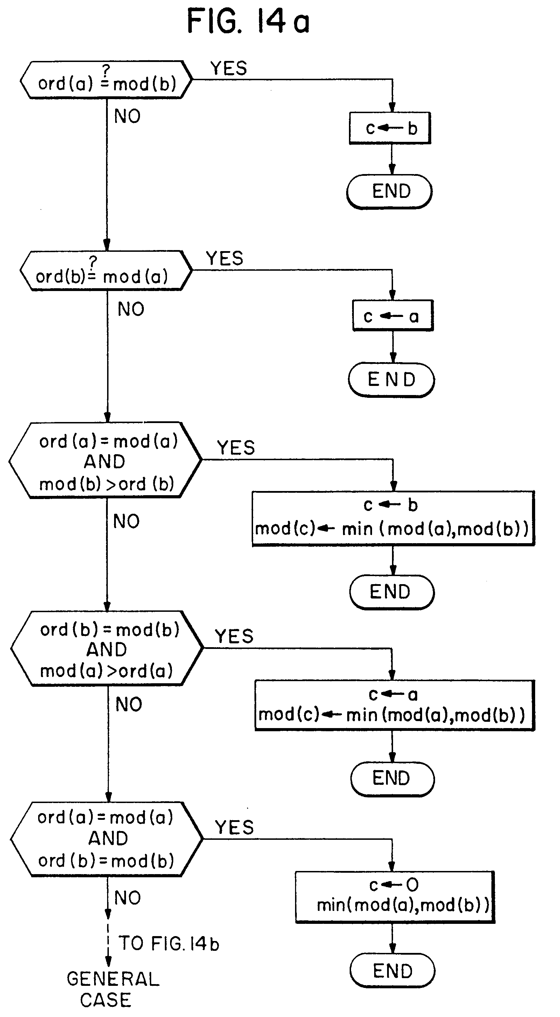

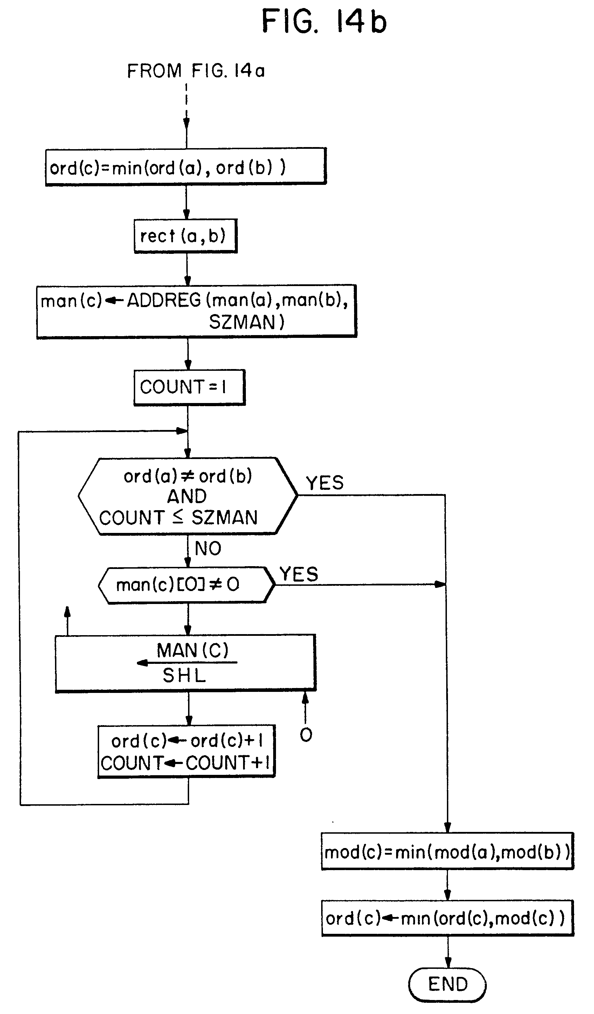

There are now described in greater detail the four basic arithmetic operations referred to above. Fig. 1b diagrammatically illustrates the implementation of four basic TDA arithmetic operations (TDAADD, TDASUB, TDAMUL, and TDADIV) including the interactions between these basic operations and auxiliary register-based TDA operations. Reference is also made to the flowcharts of Fig. 6 and Fig. 14 where the operation of TDA addition is described in greater detail. In Fig. 6 (r) represents the carry and the forward carry mechanism is clearly illustrated. It is noted that the equation giving the order of the sum is not explicit, since it is an inequality. However, the exact value of this order is given by the technique illustrated in the flowchart of Fig. 14.

The equations describing the order are modified versions of known techniques. For example, a standard formula states that

ord(x + y) $\geq$ min(ord(x),ord(y));

and that if

ord(x) $\neq$ ord(y) then ord(x + y) = min(ord(x),ord(y)).

For the TDA embodiment implemented herein a modified, stronger formula is employed that exploits the fact that

ord(x + y) = min(ord(x),ord(y))$\Leftrightarrow$ord(x) $\neq$ ord(y)

and

ord(x + y) > min(ord(x),ord(y))$\Leftrightarrow$ord(x) = ord(y).

The same comments hold true for subtraction as implemented in the flowcharts of Fig. 7 and Fig. 16.

The flowchart of Fig. 8 depicts a mantissa rectification (RECT) technique employed to equalize orders before adding or subtracting. Both the input to and output from this procedure are normalized TDA numbers a and b. If the order of (a) and (b) is not the same the mantissa of the element with the greatest order is shifted (ord(a)-ord(b)) times to the right. For example, if

a = 10010010; ord(a) = 8, and

b = 10001000; ord(b) = 6, then

a is rectified by shifting two locations to the right, and becomes

a = 00100100; TDA-ord(a) = 6.

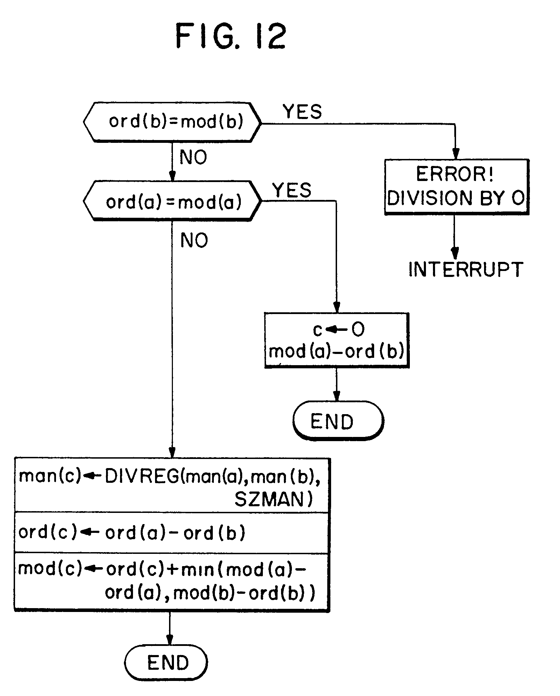

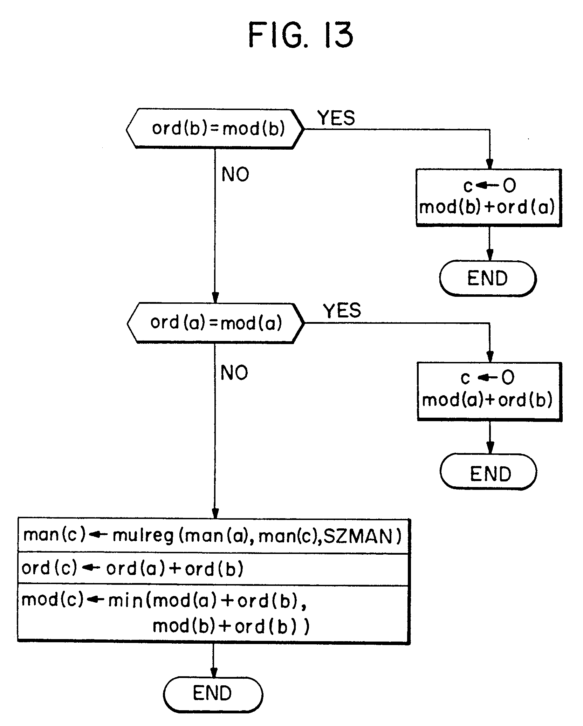

A presently preferred technique for accomplishing the multiplication of two TDA numbers is set forth in the flowchart of Fig. 13 while the division technique for two TDA numbers is shown in the flowchart of Fig. 12. The division of a register is depicted in the flowchart of Fig. 10 while the multiplication of a register is shown in Fig. 11. In regard to Fig. 11 it is noted that a is shifted to the right for each operation of the loop when b[i] ≠ 0, and c is incremented with ADDREG (Fig. 6).

It is noted that the term "casting", such as CAST LEFT (CASTL), refers to a shifting operation as illustrated in the flowchart of Fig. 5. Specifically, in the block of Fig. 10 indicated with the asterisk the effect of casting left and right is to remove the left-most bit of a, to remove the right-most bit of b and to decrement the current length (l) by one.

The ability to perform the four basic arithmetic operations also permits the computation, at run time or compile times, of the TDA representation of any variables or constants. By example, if a constant is declared as 3.141592 then at compile time it can be transformed into TDA, by converting 3141592 and 1000000 (Figs. 2-5). Next the division technique of Fig. 12 is employed. A "Reset" function can also be implemented to match at any time the TDA representation and the evaluating representation of a number. That is, if in a sequence of calculations it is determined that certain of the calculations are not rational recourse can be made to the FPU 12. When the calculations become rational the floating point representation is converted to a TDA representation and the calculations continued with the TDAU 14.

In summary, it is noted that the order formulas are equalities in the cases of division and multiplication, and are known. For addition and subtraction, the conventional techniques are improved by taking advantage of the fact that the invention is based upon 2-adic numbers and not upon the general p-adic numbers. In accordance with the invention the modulo formula, as well as its necessity in Truncated Dyadic Arithmetic, has been described in the context of the four basic arithmetic operations. Also in accordance with the invention there is disclosed the concept of a set of zeros, as opposed to a single zero.

In regard to equality testing the fact that TDA exhibits a "floating format" makes the performance of an equality test more difficult, at least in theory. If it is said that two numbers are equal when their difference is a zero a problem arises as indicated by the following example:

$x = 00100000, TDA_{order}(x) = 6;$

$y = 01000000, TDA_{order}(y) = 7;$ and

$z = 01000001, TDA_{order}(z) = 7.$

It can be seen that $x = y$, $x = z$, but $y \neq z$. Therefore, the equality is not transitive. This undesirable situation may be avoided as follows.

A preferred technique concerns a comparison of numbers such that one of them is not zero. In this regard it is important to note that a necessary condition for equality of non-zeros is the equality of the mathematical order. If there is given a set of N non-zero quantities $a_1...,a_N$ the equality test must be accomplished using the same modulo in order to avoid the phenomena of the previous example. To simplify the equality test a parameter, Precision__of__Equality, is defined as a positive integer between 1 and SZMAN.

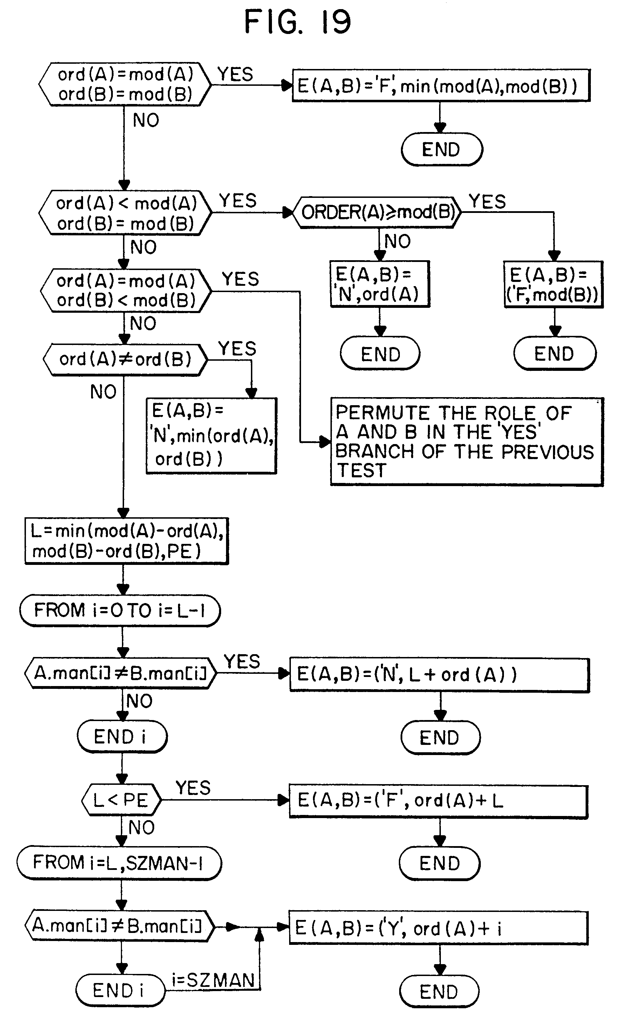

By example, a C language implementation of the equality test depicted in the flowchart of Fig. 19 may include the following preprocessor directive:

# define SZMAN = 64

# define Precision__of__Equality = 60.

This would result in the equality test (a =? b) returning "yes" (Y) if and only if the 59 bits after the leftmost 1 exist and are identical, and returning "no" (N) or "fail" (F) otherwise. It is noted that to return "yes" both a and b require 59 bits after the leading one bit and, of course, both a and b must have the same mathematical order.

The test returns "no" if either the mathematical orders are different, or the $k^{th}$ bit after the leading one bit in a is different than the $k^{th}$ bit after the leading one bit in b. If a ≠ 0 and b is a zero, then the test returns "no" only if the mathematical order of a is smaller than the modulo of b.

In other cases the test would be unsuccessful and return "fail".

In the flowchart of Fig. 19 it is assumed that A and B are normalized if non-zero. A "zero" A is represented as ord(A) = mod(A), where ord(A) is the mathematical order which is identical to the $TDA_{order}$ when the number can be normalized (non-zero). Also in Fig. 19 the term "PE" represents "Precision__of__Equality" and "E(A,B)" represents the function "Equality of A and B". As before, two TDA numbers are considered to be equal when they are not mathematically distinguishable.

Examples:

```
# define SZMAN = 8
# define Precision_of_Equality = 6
a and b are two TDA numbers being compared.
```

$(00101010, \text{TDA}_{order} = 0)$ and $(10101010, \text{TDA}_{order} = 2)$ are equal since they have same mathematical order and the five digits after the leading one are identical between the two numbers.

$(00101010, \text{TDA}_{order} = 0)$ and $(10101010, \text{TDA}_{order} = 1)$ are not equal since a and b have a different mathematical order.

$(00101010, \text{TDA}_{order} = 0)$ and $(10101011, \text{TDA}_{order} = 2)$ are equal since the five digits after the leading one are equal.

$(10101011, \text{TDA}_{\text{order}} = 0)$ and $(10101010, \text{TDA}_{\text{order}} = 0)$
are equal for the same reason.

$(10101010, \text{TDA}_{\text{order}} = 0)$ and $(00001011, \text{TDA}_{\text{order}} = -4)$
are not equal. It is noted that even though there are
not five digits after the leading one in b, which
would cause "fail" to be returned, equality can still
be determined since the third digit after the leading
one differs between a and b.

$(10101010, \text{TDA}_{\text{order}} = 0)$ and $(00001010, \text{TDA}_{\text{order}} = -4)$
returns "fail" in that there are not enough bits in b,
after the leading one bit, to satisfy the value of
Precision_of_Equality.

$(10101010, \text{TDA}_{\text{order}} = 0)$ and $(00000000, \text{TDA}_{\text{order}} = -7)$
are not equal because the mathematical order of a is 0
and the mathematical order of b is greater than or
equal to one. It is noted that the result would be the
same for any zeros of order $\geq -7$.

$(10101010, \text{TDA}_{\text{order}} = 0)$ and $(00000000, \text{TDA}_{\text{order}} = -8)$
returns "fail". It is noted that the result would be
the same for any zeros of order $\leq -8$.

The equality so defined is always transitive in that the mathematical order of one of the compared quantities is known, as well as the number of bits to consider after the leftmost one bit. Thus, if $a_1 = ... = a_N$, then all of the equalities are determined with respect to the same modulo.

When both a and b are zeros the equality test returns "fail".

Examples:

$(10101010, \text{TDA}_{order} = 0)$ and $(00001010, \text{TDA}_{order} = -4)$ returns "fail" and also returns the value 4 since both a and b are equal modulo $2^4$.

$(00000000, \text{TDA}_{order} = -3)$ and $(00000000, \text{TDA}_{order} = 6)$ returns "fail" and also returns 11 since both a and b are equal modulo $2^{11}$.

It is noted that it is preferred to compare a priori non-zero numbers rather than to compare numbers with zeros. Thus, it is preferable to compare $b^2 =? 4ac$ rather than $b^2 - 4ac =? 0$. It is also noted that, in practice, Precision__of__Equality = SZMAN.

Also, in addition to returning "Y", "N", or "F" the equality test also returns, as a convenience, the value of the largest modulo to which the equality is true.

Examples:

```
# define Precision_of_Equality=6
```

$(00101010, \text{TDA}_{order}=0) =? (10101010, \text{TDA}_{order}=2)$
Returns 'Y', 8.

$(00101010, \text{TDA}_{order}=0) =? (10101010, \text{TDA}_{order}=1)$
Returns 'N', 1. (both would be equal modulo $2^1$)

$(00101010, \text{TDA}_{order}=0) =? (10101011, \text{TDA}_{order}=2)$
Returns 'Y', 8.

$(10101011, \text{TDA}_{order}=0) =? (10101010, \text{TDA}_{order}=0)$
Returns 'Y', 7.

$(10101010, \text{TDA}_{order}=0) =? (0001011, \text{TDA}_{order}=-4)$
Returns 'N', 3.

$(10101010, \text{TDA}_{order}=0) =? (00001010, \text{TDA}_{order}=-4)$
Returns 'F', 4.

$(10101010, \text{TDA}_{order}=0) =? (00000000, \text{TDA}_{order}=-7)$
Returns 'N', 0.

$(10101010, \text{TDA}_{order}=0) =? (00000000, \text{TDA}_{order}=-8)$
Returns 'F', 0.

$(00000000, \text{TDA}_{order}=3) =? (00000000, \text{TDA}_{order}=6)$
Returns 'F', 11.

Further in accordance with the invention a TDA square root operation is now described. Reference is made to Fig. 17 which shows a flowchart of a square root operation performed with a TDA number while Fig. 18 is a flowchart showing a square root operation taken with a unit, that is, a TDA number having a mathematical order of zero. For the examples that follow it is assumed that the least significant bit of the mantissa remains a logical one.

In regard to the square root operation it is noted that the solution of ($x^2$ = a) may not exist in a given field. However, there may exist a set of numbers ($q_i$) such that ($y^2$ = a/q) has roots. If $y^2$ = a/q has roots $y_1$, $y_2$ then $z^2$ = a/$b^2$q has roots $y_1$/b, $y_2$/b. Therefore, any ($b^2 q_i$) can be chosen instead of $q_i$. In the field of dyadic numbers there are eight such (q) values, specifically

$q_i$ = {1, 5, -1, -5, 2, 10, -2, -10}.

The square root of (a) may thus be expressed as

$\sqrt{a/q} \sqrt{q}$.

The choice of (q), and the quadratic class of a dyadic element, depends on the parity of the order field and the value of the second and third LSBs of the mantissa field, read from left to right, as shown below. The following chart illustrates that the quadratic class of a dyadic element is determined by the parity of the order and the value of the second and third bits of the mantissa. In the chart the LSB of the mantissa field is assumed to be a binary one as a result of a previously performed normalization operation.

| EVEN ORDER | | ODD ORDER | |
|---|---|---|---|
| MANTISSA | CLASS | MANTISSA | CLASS |
| 00 | 1 | 00 | 2 |
| 01 | 5 | 01 | 10 |
| 11 | -1 | 11 | -2 |
| 10 | -5 | 10 | -10 |

EP 0 471 927 A2

As an example, there is determined the class of 137/208. The order is -4 (even) and the mantissa, expressed in eight bits, is (1010110). From the chart the class is ( + 5). Referring to the flowchart of Fig. 17 c = 137/1040, that is 137/(208*5), has a dyadic root, and (b) is a unit.

In summary, the class of a 2-adic number is a function of the parity of the order, and the second and third bit of the mantissa. For example, it is assumed that x belongs to the class of 10 and x is divided by 10. By definition of the class, x/10 admits two square roots.

There are now described quadratic extensions to the foregoing teaching. The basic arithmetic of the quadratic extensions is presented first.

A field generated by $\mathbb{Q}_2$ and all the square roots is an algebra over $\mathbb{Q}_2$ of dimension eight, where $\mathbb{Q}$ represents the set of rational numbers and where $\mathbb{Q}_2$ represents the set of dyadic numbers. A basis of eight elements can be selected. The basis of eight elements is in fact generated by three elements x, y and z, and the basis can be written in the form 1, x, y, z, xy, xz, yz, xyz. To compute square roots in TDA an ability to perform the four basic arithmetic operations is required, in addition to an ability to compute the square roots of a rational number. Methods for performing the four basic arithmetic operations have been presented in detail above, in addition to a description of the computation of a square root in TDA. This functionality is embodied in the operations block 20 of Fig. 1a.

The method of extracting a square root of a unit follows Hensel's Algorithm, adapted for the case of dyadic arithmetic. The method computes the sequence:

$xo = 1; x_{n+1} = x_n/2 + a/(2x_n)$

which converges towards the square root of a. Of course, division and multiplication by two are accomplished by simple shifts of the operand.

It is noted that $mod(\sqrt{a})\text{-}ord(\sqrt{a}) = mod(a)\text{-}ord(a)\text{-}1$. In other words, one digit is lost during the execution of the square root operation. That is, the Effective Length of the Mantissa (ELM) of the square root of (a) is one less than the ELM of (a), where the ELM is equal to the value of the modulo less the value of the mathematical order. This loss of a digit is one distinguishing characteristic between "pure" dyadic arithmetic and the Truncated Dyadic Arithmetic employed by the invention. Furthermore, and as a result of the loss of one digit, the Precision_of_Equality parameter referred to above is made equal, at most, to SZMAN-1.

In regard to a format of a square root each non-null rational number fits into eight classes, specifically the classes of 1,x,y,xy,z,xz,yz,xyz. These classes are defined by the following property. Two non-null rational numbers belong to the same class if and only if their ratio admits a square root. These classes are therefore uniquely defined, and consequently their numbers are uniquely defined. Of course, the choice of the representation is not uniquely defined.

By example,

$x = \sqrt{5}; y = \sqrt{-1}; z = \sqrt{2}$.

These three numbers are of course not uniquely defined. If x', y' and z' are three other generators of the classes, then after an eventual permutation, $x'^2/x^2$ will admit a square root. The same is true for y and z.

There is now provided, in accordance with the invention, quadratic extensions of the four basic arithmetic operations described previously.

Once x, y and z are known the four operations are accomplished in the following manner. Each number (A) is represented as a vector with eight components $a_i$ $0 \leq i \leq 7$. If (A) is expanded there is obtained:

$A = a_0 + a_1x + a_2y + a_3xy + a_4z + a_5xz + a_6yz + a_7xyz$.

Addition and subtraction operations are done component wise. It is only required to compute the sum or difference of each of the eight components. TDV is defined to be a vector of eight TDA numbers. An addition operation is expressed, in a C programming language example, as follows.

15

```
TDV tdvadd(a,b)

    {


        int i;
        TDV c;
        for (1+0; i<=7; i++)c[i]=tdaadd(a[i],b[i]);
        return(c);


    }
```

The subtraction operation is similar except that a function tdasub is employed to subtract a[i] and b[i].

In regard to multiplication the following is performed in accordance with the following example. If $z = 2$, $y = -1$, and $x = 5$, any square element of the quadratic extension will have the shape:

$$A = a_0 + a_1x + a_2y + a_3xy + a_4z + a_5xz + a_6yz + a_7xyz$$

If

$$B = b_0 + b_1x + b_2y + b_3xy + b_4z + b_5xz + b_6yz + b_7xyz.$$

then

$$AB = a_0b_0 + 5a_1b_1 - a_2b_2 - 5a_3b_3 + 2a_4b_4 + 10a_5b_5 - 2a_6b_6 - 10a_7b_7 +$$
$$x(a_1b_0 + a_0b_1 - a_3b_2 - a_2b_3 + 2a_5b_4 + 2a_4b_5 - 2a_7b_6 - 2a_6b_7) +$$
$$y(a_2b_0 + a_0b_2 + 5a_1b_3 + 5a_3b_1 + 2a_4b_6 + 2a_6b_4 + 10a_5b_7 + 10a_7b_5) +$$
$$xy(a_3b_0 + a_0b_3 + a_1b_2 + a_2b_1 + 2a_4b_7 + 2a_7b_4 + 2a_5b_6 + 2a_6b_5) +$$
$$z(a_0b_4 + a_4b_0 + 5a_1b_5 + 5a_5b_1 - a_2b_6 - a_6b_2 - 5a_3b_7 - 5a_7b_3) +$$
$$xz(a_0b_5 + a_5b_0 + a_1b_4 + a_4b_1 - a_2b_7 - a_7b_2 - a_3b_6 - a_6b_3) +$$
$$yz(a_6b_0 + a_0b_6 + 5a_1b_7 + 5a_7b_1 + a_4b_2 + a_2b_4 + 5a_5b_3 + 5a_3b_5) +$$
$$xyz(a_0b_7 + a_7b_0 + a_1b_6 + a_6b_1 + a_2b_5 + a_5b_2 + a_3b_4 + a_4b_3).$$

For division, it is enough to compute the inverse of A. It is convenient to denote A by $A(x,y,z)$ and then to multiply:

$$A(x,y,z) = a_0 + a_1x + a_2y + a_3xy + a_4z + a_5xz + a_6yz + a_7xyz$$

by its seven conjugates to form the product:

$$A(x,y,-z).A(x,-y,x).A(x,-y,-z).A(-x,y,z).A(-x,y,z).A) -x,-y,z).A(-x,-y,z).A(-x,-y,-z).$$

This product is referred to as (B) and it is shown that $AB \epsilon \Phi_2.1$. For the 2-adic number $N(A)$ there is obtained $1/A = B/N(A)$.

Having thus described methods to implement the four basic arithmetic operations on elements belonging to the quadratic extensions generated by all the square roots of dyadic numbers the next step computes the square roots of a 2-adic number. The techniques described above can be employed to compute the square root. After the square root has been computed some of the digits may be equal to -1. If this is the case, the method further adds two to such a digit and subtracts one from the next digit by the carry forward mechanism.

By example, it is assumed that the four bits (-1 -1 0 -1) are obtained as a result of a square root operation. Successive application of an addition of two and subtraction of one from the next digit yields the following sequence of operations.

```
-1 -1  0 -1 (original number);
 1 -2  0 -1;
 1  0 -1 -1;
 1  0  1 -2; and
 1  0  1  0.
```

An alternate method of determining the square root is as follows. Once the square root of x has been found the square root is stored in a component number i. i depends only upon the class of x and, in accordance with an aspect of the invention, it is realized that the class of 10 corresponds to i = 5. Consequently the square root of ten is stored in the eight dimensional vector as follows. y[j] is the null 2-adic number of all j but j = 5. In y[5] there is stored the square root of x/10 previously found by the technique set forth above. It is important to note that the method always chooses the root beginning with the binary numbers (1 0). The two first bits of the mantissa of the other root are (1 1). Addition of square roots belonging to different classes may contribute to a full eight dimensional vector of TDA numbers.

Having obtained a result it is necessary to place the result into TDA format, specifically the order and the modulo. If the order of x is given by o, and the modulo is given by m, it is convenient to define the effective length of the mantissa as m-o. For the technique implemented above the effective length of the mantissa of the result is decremented by one. The order is determined in accordance with the expression: $\mathrm{ord}(\sqrt{x}) = \mathrm{ord}(x)/2$.

By example, if ord(x) = -3 and mod(x) = 18, then the effective length of the mantissa of x is 21, or (18 -(-3)). The order of x is -3/2 = -2. Since the effective length is 20, the modulo of the square root is set to 18.

It should be remembered that a primary utility of the invention is in enabling an exact determination of the equality of two numbers. After employing a comparison technique, if two 2-adic numbers of the same order are not distinguishable one from the other then the two numbers can be said to be mathematically equal. Reference is made to the following examples.

Example 1:

a = 10110010; ord(2), and
b = 10110010; ord(2).

For this example it can be stated that a=b to a high probability. The probability of (a) and (b) being equal is greater as the number of bits of the mantissa is increased. For example, for mantissas each comprised of 48 bits the probability that (a) does not equal (b) becomes very small when all of the bits of the mantissas are equal and the orders are also equal.

Example 2:

a = 0101; ord(1), and
b = 1011; ord(2).

For this example the equality of (a) and (b) are not distinguishable in that if (a) were normalized the mantissa of (a) would equal the mantissa of (b) over the length of the shortest ELM. That is, normalizing (a) would cause the insertion of an unknown bit in the right-most bit of the mantissa, resulting in the ELM of (a) being three, as opposed to the ELM of length four for (b).

Example 3:

a = 1010; ord(2), and
b = 1011; ord(2).

For this example the two mantissas are distinguishable from one another and it can be said without reservation that (a) does not equal (b).

Example 4:

a = 0101; ord(1), and

18

b = 1001; ord(2).

For this example it can also be stated without reservation that (a) does not equal (b) in that even if the order of (a) where to equal the order of (b) the mantissas would be distinguishable from one another.

While the invention has been particularly shown and described with respect to a preferred embodiment thereof, it will be understood by those skilled in the art that changes in form and details may be made therein without departing from the scope and spirit of the invention.

**Claims**

1. Apparatus for performing arithmetic operations, comprising:

   means for receiving a digital representation of a number;

   first means for storing the received number (x) in a truncated dyadic arithmetic representation thereof, including first means for storing a mantissa field having m bits and for storing an order field having o bits; and

   means for operating on the stored number in accordance with one or more arithmetic operations to obtain a result that is expressed in the truncated dyadic arithmetic representation, the operating means including means for determining a value of a modulo of the result.

2. Apparatus as set forth in Claim 1 or 2 and further including means for comparing the result to another result that is expressed in the truncated dyadic arithmetic representation for indicating an equality or an inequality therebetween.

3. Apparatus as set forth in Claim 1 or 2 wherein the digital representation of the number is received in a format other than the dyadic arithmetic representation and wherein the apparatus further comprises:

   means, interposed between the receiving means and the storing means, for converting the received number into a dyadic arithmetic representation for storage within the storing means.

4. Apparatus as set forth in one of Claims 1 to 3 and further including means for storing a modulo associated with the stored number.

5. Apparatus as set forth in one of Claims 1 to 4 wherein the operating means includes means for operating on the stored number in accordance with operations selected from the group consisting essentially of addition, subtraction, multiplication, division, and square root.

6. Apparatus as set forth in one of Claims 1 to 5 and further including means for normalizing the mantissa, the normalizing means including means for repetitively shifting the storage means in a first direction until a binary one bit is shifted to a terminal bit position of the storing means.

7. Apparatus as set forth in Claim 6 wherein the first direction is from right to left.

8. Apparatus as set forth in one of Claims 1 to 7 wherein the arithmetic operations include addition ( + ), subtraction (-), multiplication (*), and division (/), and wherein the apparatus further comprises:

   second storing means for storing a second received number (y) in a dyadic arithmetic representation thereof, including second means for storing a mantissa field having m bits and for storing an order field having o bits;

   the apparatus further comprising means for determining the order (ord) of a result of an arithmetic operation performed between x and y (ord(x y)) in accordance with the following relationships:

19

EP 0 471 927 A2

```
ord(x*y) = ord(x) + ord(y);
ord(x/y) = ord(x) - ord(y);
ord(x+y) = min(ord(x), ord(y)) ⟺ ord(x) ≠ ord(y)
and
          ord(x+y) > min (ord(x), ord(y)),
otherwise;
ord(x-y) = min(ord(x), ord(y)) ⟺ ord(x) ≠ ord(y)
and
          ord(x-y) > min (ord(x), ord(y)),
otherwise;
```

the apparatus further comprising means for determining the modulo (mod) of the result of the arithmetic operation performed between x and y (mod(x y)) in accordance with the following relationships:

```
mod(x+y) = min(mod(x), mod(y));
mod(x-y) = min(mod(x), mod(y));
mod(x*y) = ord(x) + ord(y) + min(mod(x) - ord(x),
          mod(y) - ord(y)); and
mod(x/y) = ord(x) - ord(y) + min(mod(x) - ord(x),
          mod(y) - ord(y)).
```

9. Apparatus as set forth in Claim 8 and further including means for equalizing the orders of x and y, including means for repetitively shifting the mantissa field stored within either the first storage means or the second storage means (ord(x)-ord(y)) times, the storage means selected for shifting being the storage means that stores the order field containing the largest value.

10. Apparatus as set forth in Claim 8 or 9 wherein m>o.

11. A method for performing arithmetic operations with a digital data processing means, comprising the steps of:

receiving a digital representation of a number;

storing the received number as a truncated dyadic arithmetic representation thereof, including a mantissa field having m bits and an order field having o bits; and

operating on the stored number in accordance with one or more arithmetic operations to obtain a result that is expressed as a truncated dyadic arithmetic representation, wherein

the step of operating includes a step of determining a value of a modulo of the result.

12. A method as set forth in Claim 11 and further comprising the step of comparing the result to another result that is expressed as a truncated dyadic arithmetic representation for indicating at least an equality or an inequality therebetween.

13. A method as set forth in Claim 11 or 12 wherein the step of receiving receives the number in a format other than a truncated dyadic arithmetic representation and wherein the step of receiving includes a

20

step of:

converting the received number into a truncated dyadic arithmetic representation thereof.

14. A method as set forth in one of Claims 11 to 13 and further including the steps of determining a magnitude of the order as being equivalent to a number of trailing zero bits in a standard binary representation of the number and determining a magnitude of a modulo of the number as being equal to the value of the order plus a number of leading zero bits of the mantissa.

15. A method as set forth in one of Claims 11 to 14 wherein the step of operating operates on the stored number in accordance with operations selected from the group consisting essentially of addition, subtraction, multiplication, division, and square root.

16. A method as set forth in one of Claims 11 to 15 wherein for a square root operation the step of operating includes a step determining a class of the truncated dyadic number as a function of a parity of the order and as a function of the values of the second and third least significant bits of the mantissa.

17. A method as set forth in one of Claims 11 to 16 wherein the step of operating includes an initial step of normalizing the mantissa by repetitively shifting the stored mantissa in a first direction until a binary one bit is shifted to a terminal bit position.

18. A method as set forth in Claim 17 wherein the first direction is from right to left.

19. A method as set forth in one of Claims 11 to 18 wherein the arithmetic operations include addition ( + ), subtraction (-), multiplication (*), and division (/), wherein the step of storing stores a first number x and a second number y, and wherein the step of operating includes the steps of:

determining the order (ord) of a result of an arithmetic operation between x and y in accordance with the following relationships:

```
ord(x*y) = ord(x) + ord(y);
ord(x/y) = ord(x) - ord(y);
ord(x+y) = min(ord(x), ord(y))⟺ord(x) ≠ ord(y)
and
          ord(x+y) > min (ord(x), ord(y)),
otherwise;
ord(x-y) = min(ord(x), ord(y))⟺ord(x) ≠ ord(y)
and
          ord(x-y) > min (ord(x), ord(y)),
otherwise;
```

and determining the modulo (mod) of the result of the arithmetic operation between x and y in accordance with the following relationships:

$$mod(x+y) = min(mod(x), mod(y));$$
$$mod(x-y) = min(mod(x), mod(y));$$
$$mod(x*y) = ord(x) + ord(y) + min(mod(x) - ord(x),$$
$$mod(y) - ord(y)); \text{ and}$$
$$mod(x/y) = ord(x) - ord(y) + min(mod(x) - ord(x),$$
$$mod(y) - ord(y)).$$

**20.** A method as set forth in Claim 19 wherein the step of operating includes an initial step of equalizing the orders of x and y by repetitively shifting the mantissa field of either x or y (ord(x)-ord(y)) times, the mantissa field selected for shifting being a function of whether the order of x or y has the largest value.

**21.** A method as set forth in one of Claims 11 to 20 and further comprising the step of comparing the result to another result that is also expressed as a truncated dyadic arithmetic representation for indicating if the result is mathematically distinguishable from the other result, the step of comparing including an initial step of specifying a number of bits over which the comparison is to be accomplished.

**22.** A method as set forth in Claim 21 wherein the step of comparing returns an indication of equality, inequality, or of a failure to accomplish the comparison.

**23.** A method as set forth in Claim 22 wherein the step of comparing also returns a value of a maximum modulo to which the result and the other result are not mathematically distinguishable.

**24.** In a digital data processing means, a method for determining if a result of a first arithmetic procedure is equal to a result of a second arithmetic procedure, comprising the steps of:

storing one or more operands associated with the first arithmetic procedure as a truncated dyadic arithmetic representation thereof, including a mantissa field and an order field;

operating on the stored operands in accordance with one or more arithmetic operations that implement the first arithmetic procedure to obtain a first result, including a mantissa field and an order field, that is expressed as a truncated dyadic arithmetic representation;

storing one or more operands associated with the second arithmetic procedure as a truncated dyadic arithmetic representation thereof, including a mantissa field and an order field;

operating on the stored operands in accordance with one or more arithmetic operations that implement the second arithmetic procedure to obtain a second result, including a mantissa field and an order field, that is expressed as a truncated dyadic arithmetic representation;

comparing the mantissa field and order field of the first result to the mantissa field and order field of the second result to determine if the two results are distinguishable one from another; and

if the two results are distinguishable one from another, declaring that the first result is not equal to the second result.

**25.** In a digital data processing means, a method for performing arithmetic operations on numbers, comprising the steps of:
(a) operating on a first number or first plurality of numbers with first arithmetic processing means to accomplish a first arithmetic procedure, the first arithmetic processing means generating a first result that is subject to round-off errors;
(b) operating on the first number or first plurality of numbers with second arithmetic processing means to accomplish the first arithmetic procedure, the second arithmetic processing means generating a second result that is not subject to round-off errors;

(c) operating on a second number or second plurality of numbers with the first arithmetic processing means to accomplish a second arithmetic procedure and to generate a third result;

(d) operating on the second number or second plurality of numbers with the second arithmetic processing means to accomplish the second arithmetic procedure and to generate a fourth result; and

(e) comparing the second result to the fourth result to determine if the second result and the fourth result are distinguishable one from another; and

if the second result and the fourth result are distinguishable one from another,

(f) declaring that the first result is not equal to the third result; wherein

steps (b) and (d) each include an initial step of storing the number or plurality of numbers as a truncated dyadic arithmetic representation thereof, including a mantissa field having m bits and an order field having o bits; and

further include a step of processing the stored number or numbers in accordance with one or more arithmetic operations to obtain the result, the result being expressed as a truncated dyadic arithmetic representation.

26. A method as set forth in Claim 25 wherein steps (a) and (b) are accomplished substantially simultaneously and wherein steps (c) and (d) are accomplished substantially simultaneously.

27. A method as set forth in Claim 25 or 26 wherein steps (a) and (c) each include a step of processing the stored number or numbers in accordance with one or more arithmetic operations performed in floating point format to obtain the result, the result being expressed in floating point format.

# FIG. 1a

# FIG. 1b

# FIG. 2

# FIG. 3

# FIG. 4

# FIG. 5

FIG. 7

FIG. 6

## FIG. 8

```
┌──────────────────────────┐  YES
⟨    ord(a)=ord(b)    ⟩ ─────────┐
└──────────────────────────┘      │
         │ NO                      │
  YES    ▼                         │
◄──⟨ ord(a)<ord(b) ⟩               │
EXCHANGE    │ NO                   │
(a) AND (b) ▼                      │
┌──────────────────────────┐      │
│  DO ord(a)-ord(b) times  │      │
└──────────────────────────┘      │
    O ┐    │                       │
      ▼    ▼                       │
┌──────────────────────────┐      │
│    MANTISSA OF a         │      │
│       (SHR)              │      │
└──────────────────────────┘      │
         │                         │
         ▼                         │
      ◄──────────────────────────┘
      ( END )
```

## FIG. 9

```
         │
         ▼
      ┌───────┐
      │ r = O │
      └───────┘
         │
         ▼ ◄───────────────┐
┌────────────────┐          │
│   DO LOOP      │          │
│  O≤i≤L-1       │          │
└────────────────┘          │
```

| a[i] | r |   | a[i] | r |
|------|---|---|------|---|
| O    | O | → | O    | O |
| O    | I | → | I    | I |
| I    | O | → | I    | I |
| I    | I | → | O    | I |

```
         │
         ▼
┌────────────────┐
│      END       │
│   DO LOOP      │
└────────────────┘
         │
         ▼
      ( END )
```

## FIG. IO

```
      ┌───────┐
      │ ℓ = L │
      └───────┘
         │
         ▼
┌────────────────┐
│   DO LOOP      │◄──────┐
│  O≤ I ≤L-1     │        │
└────────────────┘        │
         │                │
         ▼                │
   ┌──────────┐           │
   │ c[I]=a[o]│           │
   └──────────┘           │
         │                │
         ▼         YES    │
   ⟨ a[i] =̇ O ⟩ ─────────┤
         │ NO             │
         ▼                │
┌────────────────────┐    │
│ a ← SUBREG (a,b,ℓ) │    │
└────────────────────┘    │
         │                │
         ▼◄───────────────┘
┌────────────────────┐
│ a← CASTL(a,ℓ)     │
│ b← CASTR(b,ℓ)     │
└────────────────────┘
         │
         ▼
┌────────────────────┐
│   END DO LOOP     │
└────────────────────┘
         │
         ▼
      ( END )
```

## FIG. II

```
┌────────────────────┐
│  INITIALIZATION    │
│      C ← a         │
└────────────────────┘
         │
         ▼ ◄──────────┐
┌────────────────────┐ │
│   DO LOOP          │ │
│  I≤i≤L-1          │ │
└────────────────────┘ │
    O                   │
    │        │          │
    ▼        ▼          │
┌────────────────────┐  │
│      a             │  │
│     (SHR)          │  │
└────────────────────┘  │
         │         │    │
         ▼   YES   │    │
   ⟨ b[i] =̇ O ⟩ ───────┤
         │ NO          │
         ▼             │
┌────────────────────┐ │
│ ADDREG(c,b,L) ► c⁽¹⁾│ │
└────────────────────┘ │
         │◄────────────┘
         ▼
      ( END )
```

# FIG. 12

```
        ⟨ ord(b)=mod(b) ⟩──YES──┐
               │ NO             │
               ▼                ▼
        ⟨ ord(a)=mod(a) ⟩──YES──┐   ┌──────────────┐
               │ NO         │   │   │   ERROR!     │
               │            │   └──▶│ DIVISION BY O│
               │            │       └──────────────┘
               │            │              │
               │            │              ▼
               │            │          INTERRUPT
               │            ▼
               │    ┌──────────────┐
               │    │    c ← O      │
               │    │ mod(a)-ord(b) │
               │    └──────────────┘
               │            │
               │            ▼
               │        ( END )
               │
               ▼
┌─────────────────────────────────────┐
│ man(c)← DIVREG(man(a),man(b),        │
│             SZMAN)                    │
├─────────────────────────────────────┤
│ ord(c)← ord(a)- ord(b)               │
├─────────────────────────────────────┤
│ mod(c)← ord(c)+min(mod(a)-           │
│         ord(a),mod(b)-ord(b))        │
└─────────────────────────────────────┘
               │
               ▼
           ( END )
```

# FIG. 13

# FIG. 14a

```
< ord(a) =? mod(b) >   YES ──────────────────┐
         │                                    ▼
         │ NO                            ┌─────────┐
         ▼                               │ c ← b   │
                                         └─────────┘
                                              │
                                              ▼
                                          ( END )

< ord(b) =? mod(a) >   YES ──────────────────┐
         │                                    ▼
         │ NO                            ┌─────────┐
         ▼                               │ c ← a   │
                                         └─────────┘
                                              │
                                              ▼
                                          ( END )

< ord(a) = mod(a)
     AND             >   YES ──────────────────┐
  mod(b) > ord(b)                              ▼
         │                    ┌──────────────────────────────────┐
         │ NO                 │  c ← b                            │
         ▼                    │  mod(c) ← min (mod(a), mod(b))    │
                              └──────────────────────────────────┘
                                              │
                                              ▼
                                          ( END )

< ord(b) = mod(b)
     AND             >   YES ──────────────────┐
  mod(a) > ord(a)                              ▼
         │                    ┌──────────────────────────────────┐
         │ NO                 │  c ← a                            │
         ▼                    │  mod(c) ← min (mod(a), mod(b))    │
                              └──────────────────────────────────┘
                                              │
                                              ▼
                                          ( END )

< ord(a) = mod(a)
     AND             >   YES ──────────────────┐
  ord(b) = mod(b)                              ▼
         │                    ┌──────────────────────────────────┐
         │ NO                 │  c ← O                            │
         ▼                    │  min(mod(a), mod(b))              │
    TO FIG. 14b               └──────────────────────────────────┘
                                              │
   GENERAL                                    ▼
    CASE                                  ( END )
```

# FIG. 14b

FROM FIG. 14a

$$ord(c)=min(ord(a), ord(b))$$

$$rect(a,b)$$

$$man(c) \leftarrow ADDREG(man(a), man(b), SZMAN)$$

$$COUNT = 1$$

$ord(a) \neq ord(b)$
AND
$COUNT \leq SZMAN$ — YES

NO

$man(c)[0] \neq 0$ — YES

MAN(C)
SHL

$ord(c) \leftarrow ord(c)+1$
$COUNT \leftarrow COUNT+1$

0

$$mod(c)=min(mod(a), mod(b))$$

$$ord(c) \leftarrow min(ord(c), mod(c))$$

END

32

## FIG. 15

$$ord(a) = mod(a)$$

$$man(a) \leftarrow oppreg\,(man(a), SZMAN)$$

END

## FIG. 16

$$b \leftarrow TDA\ OPP(b)$$

$$c \leftarrow TDA\ ADD(b,c)$$

END

## FIG. 17

INPUT a

COMPUTE CLASS OF $a = c$

$b = \dfrac{a}{c}$

$\left.\begin{array}{c}\end{array}\right\}$ $\dfrac{a}{c} = 2^{\beta}a$ WITH $\beta$ EVEN

$b = b\,2^{-\beta}$

COMPUTE $\sqrt{b}$

RESULT $\sqrt{a} = \sqrt{b}\,2^{\beta/2}\sqrt{c}$

$\sqrt{c}$ INDICATES WHERE RESULT IS STORED IN OUTPUT ARRAY

## FIG. 18

$$a.man\,[1] \neq 0$$
$$OR$$
$$a.man\,[2] \neq 0$$
$$OR$$
$$a.ord \neq 0$$

YES

NO

NO SQUARE ROOT OF UNIT

$c = 1$
$t = c - a$

WHILE $(t.mod > t.ord)$

$c = \dfrac{c}{2} + \dfrac{a}{2c}$

$t = a - c^2$

$mod(c) = mod(a) - 1$

END

# FIG. 19

ord(A)=mod(A)
ord(B)=mod(B) — YES → E(A,B)='F', min(mod(A),mod(B))

NO

→ END

ord(A) < mod(A)
ord(B) = mod(B) — YES → ORDER(A)≥mod(B) — YES →

NO

E(A,B)=
'N',ord(A)

E(A,B)=
('F',mod(B))

→ END       → END

ord(A)=mod(A)
ord(B) < mod(B) — YES →

NO

ord(A)≠ord(B) — YES →

NO

E(A,B)=
'N',min(ord(A),
ord(B))

PERMUTE THE ROLE OF
A AND B IN THE 'YES'
BRANCH OF THE PREVIOUS
TEST

L=min(mod(A)-ord(A),
mod(B)-ord(B),PE)

FROM i=0 TO i=L-1

A.man[i]≠B.man[i] — YES → E(A,B)=('N', L + ord(A))

NO

END i       → END

L < PE — YES → E(A,B)=('F', ord(A)+L

NO

FROM i=L,SZMAN-1       → END

A.man[i]≠B.man[i] → E(A,B)=('Y', ord(A)+ i

END i   i=SZMAN       → END